Europäisches Patentamt

European Patent Office

Office européen des brevets

(11) Publication number: **0 049 908**
**B1**

(12) **EUROPEAN PATENT SPECIFICATION**

(45) Date of publication of patent specification: **04.02.87**

(51) Int. Cl.⁴: **H 02 G 7/00, H 01 B 17/42**

(21) Application number: **81108520.8**

(22) Date of filing: **15.03.79**

(60) Publication number of the earlier application in accordance with Art. 76 EPC: **0 004 350**

(54) **Aerial power transmission system.**

(30) Priority: **17.03.78 JP 31294/78**

(43) Date of publication of application:
**21.04.82 Bulletin 82/16**

(45) Publication of the grant of the patent:
**04.02.87 Bulletin 87/06**

(84) Designated Contracting States:
**CH DE FR GB IT SE**

(56) References cited:
**DE-A-2 339 417**
**DE-A-2 361 204**
**FR-A-1 326 465**
**US-A-3 371 144**

(73) Proprietor: **MITSUBISHI DENKI KABUSHIKI KAISHA**
**2-3, Marunouchi 2-chome Chiyoda-ku**
**Tokyo 100 (JP)**

(72) Inventor: **Nobuo, Nagai**
**4-4-21, Uegahara**
**Nishinomiya-shi, Hyogo-ken (JP)**

(74) Representative: **Wächtershäuser, Günter, Dr.**
**Tal 29**
**D-8000 München 2 (DE)**

Courier Press, Leamington Spa, England.

## Description

The present invention relates to an aerial power transmission system in accordance with the preamble of the main claim. Such a system is known from DE—A—2 361 204. In such a system each one of three phase power cables must be supported by separate arms of the steel towers. Therefore, the costs for the steel towers are high. From DE—A—2 339 417 it is already known to jointly suspend three cables in a triangular configuration with conventional long trunk insulators therebetween. This arrangement requires somewhat less space. However, this triangular arrangement requires rather complicated means for the suspension and for the mutual insulation of the cables.

Therefore, it is the problem of the present invention to provide an improved aerial power transmission system which has relatively small steel towers and small spaces between the cables and which nevertheless prevents the reverse flashover phenomenon.

This problem is solved by the aerial power transmission system of claim 1.

Figures 1 and 2 show the embodiments of the aerial power transmission system of the present invention.

Figures 3 and 4 show diagrams of equivalent circuit of the embodiments of Figures 1 and 2, respectively.

Figure 5 shows a partial sectional view of an insulator containing a lightning arrester.

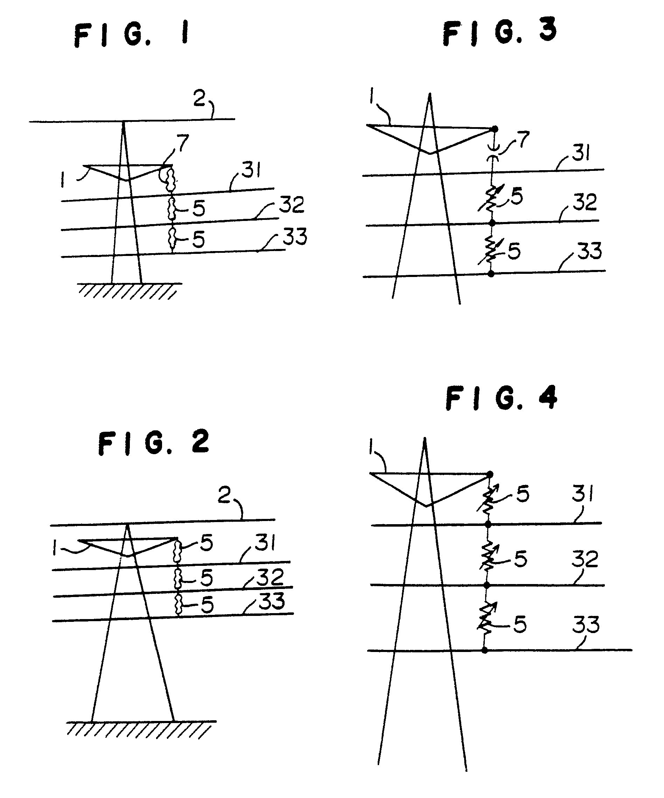

Figure 1 and 2 show an aerial power transmission system wherein the reference numeral 1 designates a steel tower; 2 designates an aerial ground wire suspended on the top of the steel tower; 31, 32 and 33 designate power transmission cables in upper, middle and lower phases which are supported on the steel tower.

In conventional power transmission systems, the power transmission cables 31 to 33 in different phases are separately supported by different arms on the steel tower 1. On the other hand, in the embodiments of Figures 1 and 2, the insulator-lightning arresters are connected between the cables 31 to 33 to support the cables whereby smaller size steel towers 1 can be used.

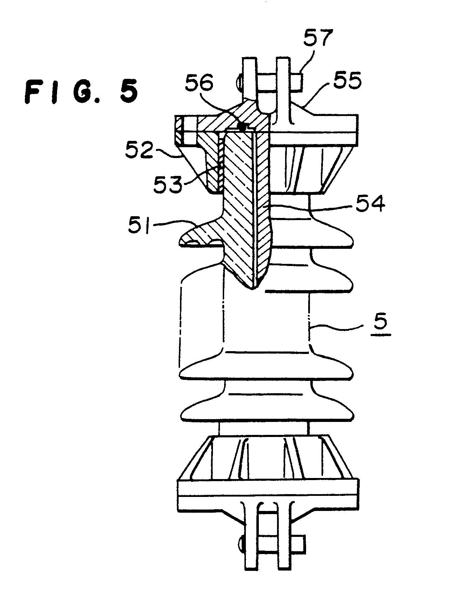

In the embodiment of Figure 1, two insulator-lightning arresters 5 having the structure of Figure 5 are connected in series between the cables 31 to 33 while a long trunk insulator 7 having arc horn type lightning arrester is connected in series with the arresters 5 and between the upper cable 31 and the arm of the steel tower 1. The insulator-lightning arrester 5 has a non-linear characteristic for reducing an abnormal voltage between the phases of the cables to a suitable voltage value. Thus, a mutual short-circuit is not caused in case of lightning.

The spaces between the cables 31 to 33 in different phases can be narrower and the number of the arms on the steel tower can be reduced from three arms to one arm, so that the steel tower can be smaller.

The equivalent circuit of the system of Figure 1 is shown in Figure 3. In this embodiment, a conventional long trunk insulator 7 having arc horn type lightning arrester is connected between the upper cable 31 and the tower whereby the flashover to the ground is not reduced as compared with the conventional system but the mutual short-circuit is prevented and a height of the steel tower can be decreased.

Figure 2 shows the other embodiment of the present invention, wherein the insulator-lightning arrester 5 shown in Figure 5 is used for supporting the cable 31 in the upper phase on the tower 1.

The equivalent circuit of the system of Figure 2 is shown in Figure 4. In accordance with the system of Figure 2, the protection of the cables between phases and to the ground can be attained to prevent completely the lightning damage and the height of the steel towers can be decreased.

Sometimes, a composite aerial power transmission system with many power transmission cables for different voltages is supported on the same steel towers.

Thus, when the height of the steel towers is not reduced, the number of the circuits in the composite system can be increased.

The embodiments have been illustrated for the use of one long trunk insulator or one insulator-lightning arrester. However, it is possible to connect the insulators or the insulator-lightning arresters in series as desired in the case of high voltage such as a super-high voltage system.

As shown in Figure 5, the lightning arrester 5 comprises a lightning arrester element 54 made of sintered product of a main component of zinc oxide held inside a hollow long trunk insulator 51. The reference numeral 52 designates a flange; 53 designates a cement bonded part for bonding the flange 52 to the long trunk insulator 51; 55 designates a metal cover; 56 designates a packing for shielding; and 57 designates a pin for a connecting fitting. When the arrester 5 is used in the power transmission system, the power transmission cables 31 to 33 are protected by the lightning arrester device whereby the lightning flashover and the lightning reverse flashover from the aerial ground wire 2 can be prevented. However, when due to low strength it is not suitable to support the power transmission cables 31 to 33 by the arresters 5 alone, it is possible to connect the arresters 5 between the steel tower 1 and the power transmission cables 31 to 33 in parallel to conventional long trunk insulators.

## Claims

1. Aerial power transmission system comprising power transmission cables (31, 32, 33) supported by steel towers (1), insulators as well as lightning arrestors (5; 7) contained within insulators for supporting the power cables (31, 32, 33) on said steel towers (1), characterized in that an insulator containing a lightning arrestor (5; 7) is connected between said steel tower (1) and a first cable (31) carrying one phase and a second insulator containing a lightning arrestor (5) is connected between said first cable (31) and a second cable (32, 33) carrying another phase.

2. Aerial power transmission system according to Claim 1, characterized in that the first lightning arrestor (5) connected between said steel tower (1) and said first cable (31) carrying one phase and the second lightning arrestor (5) connected between said first cable (31) and the second cable (32, 33) carrying another phase are respectively made of a sintered product comprising a main component of zinc oxide sintered at high temperature.

3. Aerial power transmission system according to Claim 1, characterized in that a long trunk insulator having arc horn type lightning arrestor (7) is connected between said steel tower (1) and said first cable (31) and an insulator (51) containing a lightning arrestor made of a sintered product comprising a main component of zinc oxide sintered at high temperature is connected between said first cable (31) and said second cable (32, 33).

4. Aerial power transmission system according to one of Claims 1 to 3, characterized in that said lightning arrestor (5) comprises a non-linear resistor having high non-linear resistive characteristics.

5. Aerial power transmission system according to Claim 4, characterized in that said non-linear resistor is made of a sintered product comprising a main component of zinc oxide sintered at high temperature.

6. Aerial power transmission system according to one of Claims 1 to 5, characterized in that said power transmission cables (31, 32, 33) are in at least three phases arranged in upper and lower positions on each steel tower (1).

7. Aerial power transmission system according to one of Claims 1 to 6, characterized in that said lightning arrestor is held inside said insulator.

**Patentansprüche**

1. Freileitungssystem mit Hochspannungsübertragungsleitungen (31, 32, 33) an Stahlmasten, mit Isolatoren und Blitzableitern (5; 7) innerhalb von Isolatoren, welche der Aufhängung der Leitungen (31, 32, 33) an den Stahlmasten (1) dienen, dadurch gekennzeichnet, daß ein einen Blitzableiter (5; 7) enthaltender Isolator zwischen dem Stahlmast (1) und einer ersten Leitung (31) für eine erste Phase angeordnet ist und ein zweiter Isolator, welcher einen Blitzableiter (5) enthält, zwischen dem ersten Kabel (31) und einem zweiten Kabel (32, 33) für eine andere Phase angeordnet ist.

2. Freileitungssystem nach Anspruch 1, dadurch gekennzeichnet, daß der erste Blitzableiter (5) zwischen dem Stahlmast (1) und der ersten Leitung (31) für die erste Phase und der zweite Blitzableiter (5) zwischen der ersten Leitung (31) und der zweiten Leitung (32, 33) für die andere Phase jeweils aus einem gesinterten Produkt bestehen, das als Hauptkomponente ein bei hoher Temperatur gesintertes Zinkoxid umfaßt.

3. Freileitungssystem nach Anspruch 1, dadurch gekennzeichnet, daß ein langgestreckter Isolatorkörper mit einem Blitzableiter (7) vom Bogenhorntyp zwischen dem Stahlmast (1) und der ersten Leitung (31) angeordnet ist und daß zwischen der ersten Leitung (31) und der zweiten Leitung (32, 33) ein Isolator (51) angeordnet ist, welcher einen Blitzableiter enthält, der aus einem gesinterten Produkt besteht, das eine Hauptkomponente aus bei hoher Temperatur gesintertem Zinkoxid umfaßt.

4. Freileitungssystem nach einem der Ansprüche 1 bis 3, dadurch gekennzeichnet, daß der Blitzableiter (5) einen nicht-linearen Widerstand mit stark nicht-linearer Widerstandscharakteristik umfaßt.

5. Freileitungssystem nach Anspruch 4, dadurch gekennzeichnet, daß der nicht-lineare Widerstand aus einem gesinterten Produkt besteht, das eine Hauptkomponente aus bei hoher Temperatur gesintertem Zinkoxid umfaßt.

6. Freileitungssystem nach einem der Ansprüche 1 bis 5, dadurch gekennzeichnet, daß die Leitungen (31, 32, 33) mit mindestens 3 Phasen in oberen und unteren Positionen an jedem Stahlmast (1) angeordnet sind.

7. Freileitungssystem nach einem der Ansprüche 1 bis 6, dadurch gekennzeichnet, daß der Blitzableiter im Inneren des Isolators untergebracht ist.

**Revendications**

1. Système de transport de courant HT aérien comportant des câbles de transport de courant HT (31, 32, 33) supportés par des pylônes en acier (1), des isolateurs ainsi que des parafoudres (5; 7) contenus dans des isolateurs en vue de supporter les câbles de courant HT (31, 32, 33) sur lesdits pylônes en acier (1), caractérisé en ce qu'un isolateur contenant un parafoudre (5; 7) est connecté entre ledit pylône en acier (1) et un premier câble (31) porteur d'une phase, tandis qu'un second isolateur contenant un parafoudre (5) est connecté entre ledit premier câble (31) et un second câble (32, 33) porteur d'une autre phase.

2. Système de transport de courant HT aérien selon la revendication 1, caractérisé en ce que le premier parafoudre (5) connecté entre ledit pylône en acier (1) et ledit premier câble (31) porteur d'une phase et le second parafoudre (5) connecté entre ledit premier câble (31) et le second câble (32, 33) porteur d'une autre phase sont respectivement faits d'un produit fritté composé principalement d'oxyde de zinc fritté à haute température.

3. Système de transport de courant HT aérien selon la revendication 1, caractérisé en ce qu'un isolateur à long fût muni d'un parafoudre (7) du type corne de garde est connecté entre ledit pylône en acier (1) et ledit premier câble (31), tandis qu'un isolateur (51) contenant un parafoudre fait d'un produit fritté composé principalement d'oxyde de zinc fritté à haute température est connecté entre ledit premier câble (31) et ledit second câble (32, 33).

4. Système de transport de courant HT aérien selon l'une des revendications 1 à 3, caractérisé en ce que ledit parafoudre (5) comporte une résistance non linéaire possédant des caractéristiques chimiques non linéaires élevées.

5. Système de transport de courant HT aérien selon la revendication 4, caractérisé en ce que ladite résistance non linéaire est faite d'un produit fritté composé principalement d'oxyde de zonc fritté à haute température.

6. Système de transport de courant HT aérien selon l'une des revendications 1 à 5, caractérisé en ce que lesdits câbles de transport de courant HT (31, 32, 33) existent au moins en trois phases disposées dans des positions supérieures et inférieures sur chaque pylône en acier (1).

7. Système de transport de courant HT aérien selon l'une des revendications 1 à 6, caractérisé en ce que ledit parafoudre est retenu à l'intérieur dudit isolateur.

# FIG. 1

# FIG. 3

# FIG. 2

# FIG. 4

# F I G. 5